(19) Europäisches Patentamt
European Patent Office
Office européen des brevets

(11) **EP 1 682 391 B1**

(12) **FASCICULE DE BREVET EUROPEEN**

(45) Date de publication et mention
de la délivrance du brevet:
**13.02.2008   Bulletin 2008/07**

(21) Numéro de dépôt: **04790814.0**

(22) Date de dépôt: **25.10.2004**

(51) Int Cl.:
*B60T 8/00* (2006.01)     *G01P 3/487* (2006.01)

(86) Numéro de dépôt international:
**PCT/EP2004/012025**

(87) Numéro de publication internationale:
**WO 2005/044651 (19.05.2005 Gazette 2005/20)**

(54) **TECHNIQUES DE TRAITEMENT DU SIGNAL**

SIGNALVERARBEITUNGSTECHNIKEN

SIGNAL PROCESSING TECHNIQUES

(84) Etats contractants désignés:
**AT BE BG CH CY CZ DE DK EE ES FI FR GB GR HU IE IT LI LU MC NL PL PT RO SE SI SK TR**

(30) Priorité:  **05.11.2003   FR 0313078**

(43) Date de publication de la demande:
**26.07.2006   Bulletin 2006/30**

(73) Titulaires:
• **Société de Technologie Michelin**
  **63000 Clermont-Ferrand Cedex 09 (FR)**
• **Michelin Recherche et Technique S.A.**
  **1763 Granges-Paccot (CH)**

(72) Inventeur: **BIESSE, Frédéric**
**F-03800 Monteignet sur l'Andelot (FR)**

(74) Mandataire: **Bauvir, Jacques**
**Michelin & Cie,**
**Service SGD/LG/PI-LAD**
**C.E.R. Ladoux - F35**
**63040 Clermont-Ferrand Cedex 09 (FR)**

(56) Documents cités:
**US-A- 4 764 871          US-A1- 2003 164 036**
**US-B1- 6 293 140**

**Description**

Plus précisément, l'invention concerne un procédé de surveillance de la rotation d'un corps tournant autour d'un axe de rotation et portant, sur sa périphérie, au moins une première piste circulaire centrée sur l'axe de rotation et constituée de marques régulièrement espacées les unes des autres, dans lequel chaque piste de marques est associée à un capteur stationnaire par rapport au corps tournant, disposé en regard de cette piste, influencé par les marques de cette piste qui défilent devant lui et produisant, en tant que signal de sortie, un signal périodique correspondant, dans lequel on procède à d'extraction d'au moins une grandeur, telle qu'une amplitude entre extremums, une fréquence fondamentale, une phase, ou une amplitude constante de fond continu, associée à un signal périodique présentant une fréquence au plus égale à une fréquence maximale prédéterminée et incluant une éventuelle composante continue, une composante fondamentale sinusoïdale et d'éventuelles harmoniques.

Dans les techniques traditionnelles, le procédé le plus répandu pour analyser un signal périodique et en extraire les principales grandeurs caractéristiques repose avant tout sur une détection des passages de ce signal par zéro.

La connaissance de la fréquence fondamentale du signal périodique, acquise par chronométrage des instants de passages à zéro, permet ensuite, de proche en proche, de déduire les principales autres grandeurs caractéristiques de ce signal.

Une telle approche s'avère néanmoins peu efficace dans le cas où la fréquence du signal périodique concerné atteint des faibles valeurs, l'allongement de l'intervalle de temps entre deux passages à zéro successifs de ce signal conduisant à un allongement éventuellement inacceptable du temps d'analyse.

On peut citer par exemple le brevet US 4,754,871, qui propose d'utiliser un filtre de Kalman pour estimer la vitesse de la roue. Le déposant a observé que cette technique est malheureusement assez gourmande en temps de calcul.

L'invention, qui se situe dans ce contexte, a notamment pour but de proposer un procédé d'extraction d'au moins une grandeur caractéristique d'un signal périodique, qui présente une nette amélioration par rapport à l'état de la technique.

A cette fin, le procédé de l'invention, par ailleurs conforme à la définition générique qu'en donne le préambule ci-dessus, est essentiellement caractérisé en ce qu'il comprend : une opération préliminaire consistant à établir un modèle de système dynamique défini par un vecteur d'état instantané à plusieurs composantes et par une matrice de transition d'état; une opération itérative de mesure consistant à produire, à une fréquence au moins égale au double de la fréquence maximale prédéterminée, des échantillons numériques dont chacun est représentatif de l'amplitude instantanée mesurée du signal périodique; une opération itérative de prédiction, consistant à calculer une amplitude instantanée prédite du signal périodique à chaque instant en cours par application de la matrice de transition au vecteur d'état associé à un instant précédant l'instant en cours, conduisant à un vecteur d'état prédit pour l'instant en cours, puis par application au vecteur d'état prédit d'une matrice d'observation assimilant l'amplitude instantanée mesurée du signal périodique à une manifestation au moins partielle du vecteur d'état instantané du système dynamique; une opération itérative de correction, consistant à quantifier un écart entre l'amplitude mesurée et l'amplitude prédite du signal périodique à l'instant en cours; une opération itérative de mise à jour, consistant à mettre à jour le vecteur d'état instantané du système, associé à l'instant en cours, en fonction de l'écart quantifié et du vecteur d'état du système qui est associé à l'instant précédant l'instant en cours; et une opération itérative de présentation de résultat, consistant à déduire à chaque instant ladite grandeur de l'une au moins des composantes du vecteur d'état instantané associé à cet instant.

Le vecteur d'état instantané comprend une composante représentative de l'amplitude instantanée de la composante fondamentale du signal périodique, une composante représentative de l'amplitude instantanée de la composante fondamentale du signal périodique déphasée de 90 degrés, une composante représentative de l'amplitude de la composante continue, et une composante représentative de la pulsation ou de la fréquence de la composante fondamentale.

Dans le cas où le signal périodique comprend, parmi plusieurs harmoniques éventuelles, une harmonique d'ordre minimal, le procédé de l'invention est particulièrement applicable lorsque l'amplitude entre extremums de l'harmonique d'ordre minimal est au moins égale au dixième de l'amplitude entre extremums de la composante fondamentale.

Le procédé de l'invention est notamment applicable à la surveillance ou à l'analyse de la rotation d'un corps tournant autour d'un axe de rotation et portant, sur sa périphérie, au moins une première piste circulaire centrée sur l'axe de rotation et constituée de marques régulièrement espacées les unes des autres, chaque piste de marques étant, dans cette application, associée à un capteur stationnaire par rapport au corps tournant, disposé en regard de cette piste, influencé par les marques de cette piste qui défilent devant lui et produisant, en tant que signal de sortie, un signal périodique correspondant.

Le procédé de l'invention est à ce titre particulièrement bien adapté au cas où le corps tournant est un pneumatique monté sur une jante de roue d'un véhicule, où un flanc de ce pneumatique porte au moins deux pistes de marques dont la première est relativement proche de la jante et dont la seconde est relativement proche d'une bande de roulement du pneumatique, et où les première et seconde pistes portent le même nombre de marques et sont associées à des premier et second capteurs respectifs délivrant des premier et second signaux périodiques respectifs, la surveillance de la rotation du pneumatique incluant au moins la détermination d'une différence de phase entre les premier et second signaux périodiques.

Chaque marque est de préférence constituée par une aimantation locale du flanc du pneumatique, chaque signal périodique étant ainsi très proche d'une sinusoïde pure.

Dans l'application du procédé de l'invention à la surveillance ou à l'analyse de la rotation du pneumatique, cette surveillance ou cette analyse peuvent inclure une évaluation d'une déformation du flanc du pneumatique, résultant de l'application d'un couple entre la jante et la bande de roulement, et se traduisant par une variation de la différence de phase entre les premier et second signaux périodiques.

Le procédé de l'invention est ainsi particulièrement bien adapté à la mise en oeuvre d'une technique par exemple décrite dans le brevet US 5 913 240 et connue sous l'acronyme "SWT", tiré de l'anglais "Side Wall Torsion", en référence à l'évaluation de la torsion du flanc du pneumatique sous l'effet du couple précédemment évoqué.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma opérationnel de mise en oeuvre du procédé de l'invention ;
- la figure 2 est un diagramme représentant, en fonction du temps T, la vitesse angulaire de rotation d'une roue lors d'un freinage suivi d'un relâchement ; et
- la figure 3 est une vue en perspective d'une roue équipée de deux pistes de marques magnétiques et de deux capteurs.

Comme indiqué précédemment, l'invention concerne notamment un procédé pour analyser un signal périodique S incluant une éventuelle composante continue So, une composante fondamentale sinusoïdale S1 et d'éventuelles harmoniques Sn, et plus précisément pour extraire au moins une grandeur de ce signal, telle que son amplitude entre extremums, sa fréquence fondamentale, sa phase par rapport à un signal périodique de référence, ou l'amplitude de sa composante continue.

En d'autres termes, le signal S analysé s'écrit :

$$S = So + S1 + \sum_{n=2}^{\infty}(Sn)$$

expression dans laquelle :

So est une constante, au moins sur une échelle de temps d'observation relativement courte par rapport à une période d'échantillonnage, So étant éventuellement nulle,

$S1 = a_1.\sin(\omega.t + \phi)$, où $a_1$ est la demi-amplitude entre extremums de la composante fondamentale S1, où $\omega$ est la pulsation de la composante fondamentale S1, où t représente le temps, et où $\phi$ représente la phase de la composante fondamentale S1 par rapport à une base temporelle prédéterminée, par exemple donnée par un signal de référence de pulsation $\omega$, et

$Sn = a_n.\sin(n.\omega.t + \phi_n)$, où $a_n$ est la demi-amplitude, éventuellement nulle, entre extremums de l'harmonique Sn d'ordre n, où $n.\omega$ est la pulsation de cette harmonique Sn, et où $\phi_n$ représente la phase de cette même harmonique Sn par rapport à une base temporelle prédéterminée.

En pratique, le procédé de l'invention s'applique de préférence à un signal périodique S dont l'harmonique non nulle d'ordre minimal, c'est-à-dire celle pour laquelle l'ordre n prend la plus petite valeur ninf, présente une amplitude relative limitée.

Plus précisément, le procédé de l'invention s'applique de préférence à un signal périodique S dont l'harmonique Sninf non nulle d'ordre minimal ninf présente une amplitude entre extremums $2.a_{ninf}$ est au plus égale au dixième de l'amplitude entre extremums $2.a_1$ de la composante fondamentale S1, autrement dit qui satisfait à l'inégalité :

$$a_1 \geq 10.a_{ninf}$$

De façon schématique, le procédé de l'invention consiste à appliquer au suivi du signal périodique S, modélisé comme la somme de sa composante fondamentale S1 et de son éventuelle composante continue So, un filtrage particulier, en lieu et place du filtrage de Kalman proposé dans la technique antérieure.

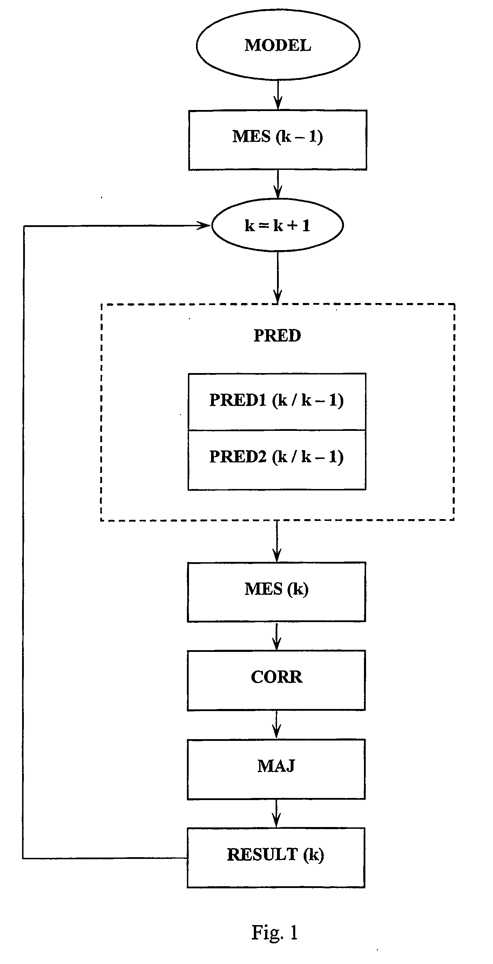

Ce procédé, dont les opérations sont illustrées à la figure 1, comprend tout d'abord une opération préliminaire de modélisation MODEL qui consiste à établir un modèle de système dynamique défini par un vecteur d'état instantané à plusieurs composantes et par une matrice de transition d'état.

Comme indiqué précédemment, le signal périodique est modélisé comme la somme de So et de S1, de sorte que le vecteur d'état instantané $\hat{x}$ prend par exemple la forme :

$$\hat{x} = \begin{bmatrix} \hat{x}_p \\ \hat{x}_q \\ \hat{x}_c \\ \hat{\omega} \end{bmatrix}$$

dans laquelle :

- la composante $\hat{x}_p$ est représentative de l'amplitude instantanée de la composante fondamentale S1 du signal périodique S, c'est-à-dire $a_1.\sin(\omega.t + \phi)$ à l'instant t considéré,

- la composante $\hat{x}_q$ est représentative de l'amplitude instantanée de la composante fondamentale S1 du signal périodique déphasée de 90 degrés, c'est-à-dire $a_1.\cos(\omega.t + \phi)$ à l'instant t considéré,

- la composante $\hat{x}_c$ est représentative de l'amplitude de la composante continue So,

- et la composante $\hat{\omega}$ est représentative de la pulsation de la composante fondamentale S1, qui est reliée à la fréquence F de cette composante par la formule $F = \hat{\omega}/2\pi$.

La matrice *A* de transition d'état est définie par :

$$A = \begin{bmatrix} \cos(\hat{\omega}T_e) & -\sin(\hat{\omega}T_e) & 0 & 0 \\ \sin(\hat{\omega}T_e) & \cos(\hat{\omega}T_e) & 0 & 0 \\ 0 & 0 & 1 & 0 \\ 0 & 0 & 0 & 1 \end{bmatrix}$$

où $T_e$ représente une période d'échantillonnage, c'est-à-dire l'inverse d'une fréquence d'échantillonnage $f_e$, cette fréquence d'échantillonnage $f_e$ étant au moins égale au double de la fréquence maximale $f_{max}$ du signal périodique S.

Le procédé de l'invention comprend par ailleurs une opération itérative de mesure MES qui consiste à produire, à la fréquence d'échantillonnage $f_e$, des échantillons numériques $y_k$ dont chacun est représentatif de l'amplitude instantanée mesurée du signal périodique S.

Au lieu de traiter le temps t comme une variable continue, l'opération d'échantillonnage conduit à ne considérer que les instants de la forme $t = k.T_e$ auxquels un échantillon numérique est produit, k étant un nombre entier qui, par convention de langage, sera considéré comme identifiant un instant en cours.

Comme le montre la figure 1, une première mesure est faite à un instant k-1 antérieur à un processus itératif, et permettant donc de disposer d'un échantillon initial $y_{k-1}$.

A l'intérieur du processus itératif, le procédé de l'invention comprend une opération itérative de prédiction PRED consistant à calculer une amplitude instantanée prédite $y_{k/k-1}$ du signal périodique S à chaque instant k, et comprenant elle-même deux opérations élémentaires respectivement notées PRED1 et PRED2.

L'opération élémentaire PRED1 consiste à calculer une prédiction $\hat{x}_{k/k-1}$ du vecteur d'état instantané $\hat{x}$ pour l'instant en cours k en appliquant la matrice A de transition au vecteur d'état $\hat{x}_{k-1/k-1}$ associé à l'instant k-1 précédant l'instant en cours k, c'est-à-dire en effectuant le calcul :

$$\hat{x}_{k/k\text{-}1} = A \;\; \text{x} \;\; \hat{x}_{k\text{-}1/k\text{-}1}$$

L'opération élémentaire PRED2 consiste à calculer l'amplitude instantanée prédite $\hat{y}_{k/k-1}$ du signal périodique S pour l'instant en cours k en appliquant à la prédiction $\hat{x}_{k/k-1}$ du vecteur d'état instantané $\hat{x}$ pour l'instant en cours k une matrice d'observation C, c'est-à-dire en effectuant le calcul :

$$\hat{y}_{k/k\text{-}1} = C \;\; \text{x} \;\; \hat{x}_{k/k\text{-}1}$$

La matrice d'observation, qui prend pour valeur :

$$C = \begin{bmatrix} 1 & 0 & 1 & 0 \end{bmatrix}$$

traduit simplement le fait que chaque échantillon mesuré $y_k$ n'a pour amplitude que la somme des amplitudes des première et troisième composantes $\hat{x}_p$ et $\hat{x}_c$ du vecteur d'état instantané $\hat{x}$, la matrice d'observation $C$ assimilant donc l'amplitude instantanée mesurée $y_k$ du signal périodique S à une manifestation partielle du vecteur d'état instantané du système dynamique.

Après l'obtention, au moyen de l'opération itérative de mesure MES, d'un échantillon numérique $y_k$ représentatif de l'amplitude instantanée du signal périodique S à l'instant en cours k, le procédé exécute une opération itérative de correction CORR, qui consiste à quantifier l'écart $\nu_k$ entre l'amplitude mesurée $y_k$ et l'amplitude prédite $\hat{y}_{k/k-1}$ du signal périodique à l'instant en cours k, c'est-à-dire à effectuer le calcul :

$$\nu_k = y_k - \hat{y}_{k/k\text{-}1}$$

Le procédé comprend ensuite une opération itérative de mise à jour MAJ, qui consiste à mettre à jour le vecteur d'état instantané $\hat{x}_{k/k}$ du système, associé à l'instant en cours k, en fonction de l'écart quantifié $\nu_k$ et du vecteur d'état $\hat{x}_{k/k-1}$ du système qui est associé à l'instant k-1 précédant l'instant en cours k.

Plus précisément, l'opération itérative de mise à jour MAJ est mise en oeuvre en effectuant le calcul :

$$\hat{x}_{k/k} = \hat{x}_{k/k\text{-}1} + K \, \text{x} \, \nu_k \,,$$

où K est un facteur de gain donné par l'expression :

$$K = \begin{bmatrix} \dfrac{2}{T_0} & 0 & \dfrac{2}{T_0} & -\dfrac{2\,\hat{x}_{qk} \times \nu_k}{T_0 T_f\left(\hat{x}_{pk}^2 + \hat{x}_{qk}^2\right)} \end{bmatrix} \times \dfrac{1}{f_e}$$

dans laquelle $T_0$ est le temps de réponse du filtre, exprimé en secondes, pour estimer l'amplitude du signal périodique S, $T_f$ est le temps de réponse du filtre, exprimé en secondes, pour estimer la fréquence du signal périodique S, et $f_e$ est la fréquence d'échantillonnage, les grandeurs $T_0$ et $T_f$ pouvant être déterminées de façon expérimentale et faire l'objet d'optimisation par essai et erreur.

Enfin, le procédé de l'invention comprend une opération itérative RESULT de présentation de résultat, qui consiste à utiliser une ou plusieurs des composantes $\hat{x}_p$, $\hat{x}_q$, $\hat{x}_c$, $\hat{\omega}$ du vecteur d'état instantané $\hat{x}_{k/k}$ associé à l'instant en cours k pour en déduire la valeur que prend, à cet instant k, une grandeur caractéristique du signal périodique S.

Les détails de cette dernière opération, qui utilise les relations fondamentales de trigonométrie bien connues de l'homme du métier, varient selon la nature de la grandeur recherchée.

Si par exemple il s'agit simplement d'extraire la fréquence fondamentale F du signal périodique S, l'opération RESULT consistera à effectuer le calcul :

$$F = \hat{\omega}/2\pi.$$

S'il s'agit d'extraire l'amplitude B entre extremums de la composante fondamentale S1, l'opération RESULT consistera à effectuer le calcul :

$$B = 2 \times \sqrt{\hat{x}_p^2 + \hat{x}_q^2},$$

l'homme du métier étant en mesure, sur la base de la description qui précède et de ses connaissances générales, d'appliquer la formule trigonométrique adaptée à la grandeur recherchée.

Une fois exécutée l'opération RESULT, le processus itératif est rebouclé avec incrémentation d'une unité de l'instant k en cours.

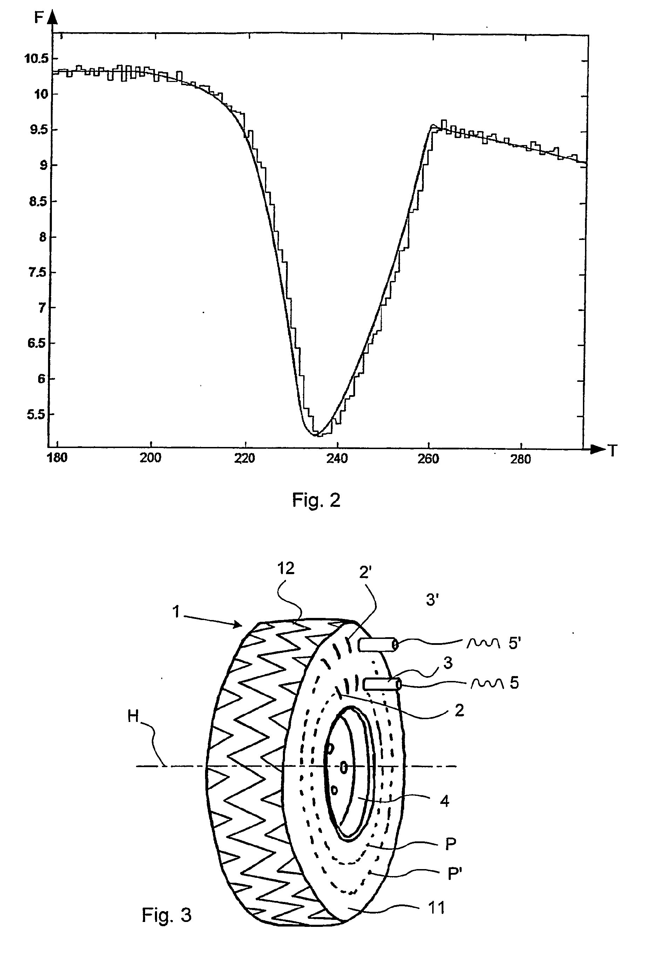

Le procédé de l'invention est applicable à la surveillance ou à l'analyse de la rotation d'un corps 1 tournant autour d'un axe de rotation H, par exemple d'un pneumatique 1 (figure 3) équipant la roue d'un véhicule, ou d'une roue de codage (non représentée) liée en rotation à la roue du véhicule.

Dans ce cas, le corps tournant 1 dont la rotation est surveillée porte, sur sa périphérie, une ou plusieurs pistes circulaires telles que P et P', centrées sur l'axe de rotation H et constituées chacune de marques, telles que 2 et 2', régulièrement espacées les unes des autres.

A chaque piste P et P' est associé un capteur tel que 3 et 3', stationnaire par rapport au corps tournant 1, disposé en regard de cette piste, influencé par les marques 2 de cette piste qui défilent devant lui et produisant, en tant que signal de sortie, un signal périodique correspondant, tel que S et S'.

La figure 2 illustre, par le graphe crénelé, l'allure d'un signal issu, de façon classique, d'un capteur de rotation de roue d'un véhicule automobile, utilisant une roue de codage ABS (système d'anti-blocage), dans le cas où la roue est freinée puis relâchée.

Au cours du temps t, la fréquence F de rotation de la roue du véhicule chute au cours du freinage jusqu'à une situation proche d'un blocage, puis augmente à nouveau lorsque la roue est relâchée.

Sur la figure 2 apparaissent, outre le graphe crénelé, deux graphes courbes continus et si proches l'un de l'autre qu'ils sont en fait indiscernables.

L'un de ces graphes courbes continus représente la fréquence de rotation réelle de la roue du véhicule dans les conditions précédemment décrites, et l'autre de ces graphes courbes et continus représente la fréquence de rotation de la roue du véhicule, telle qu'elle est reconstituée par la mise en oeuvre du procédé de l'invention appliqué au suivi de cette fréquence de rotation et utilisant un capteur délivrant un signal pseudo-sinusoïdal au lieu d'un signal en créneaux.

La figure 3 illustre une application particulière du procédé de l'invention, dans laquelle le corps tournant 1 est un pneumatique monté sur une jante 4 équipant la roue d'un véhicule et dans laquelle le flanc intérieur 11 de ce pneumatique porte deux pistes P et P' formées de marques respectives 2 et 2'.

La première piste P est relativement proche de la jante 4, tandis que la seconde piste P' est relativement proche de la bande de roulement 12 du pneumatique.

Les pistes P et P' portent le même nombre de marques respectives 2 et 2' et sont associées à deux capteurs respectifs 3 et 3'.

Chaque marque telle que 2 et 2' est par exemple constituée par une aimantation locale du flanc 11 du pneumatique 1, de sorte que chaque capteur intègre, entre deux marques successives, les influences de ces marques et délivre un signal périodique correspondant, S ou S', très proche d'une sinusoïde pure.

Dans ces conditions, la surveillance de la rotation du pneumatique 1 peut avantageusement inclure la détermination de la différence de phase $\phi$ entre les signaux périodiques S et S', cette différence de phase renseignant sur la déformation que subit le flanc 11 du pneumatique 1 lors de l'application d'un couple entre la jante 4 et la bande de roulement 12, c'est-à-dire lors d'un freinage ou d'une accélération du véhicule.

Pour ce faire, les composantes $\hat{x}_p$ et $\hat{x}_p$' des vecteurs d'état $\hat{x}$ et $\hat{x}$' respectivement associés à S et S' sont modélisées comme étant respectivement égales à $a_1.\sin(\omega.t + \phi/2)$ et à $a_1.\sin(\omega.t - \phi/2)$ à l'instant t considéré, après normalisation des amplitudes de S et S'.

De même, les composantes $\hat{x}_q$ et $\hat{x}_q$' des vecteurs d'état $\hat{x}$ et $\hat{x}$' sont modélisées comme étant respectivement égales à $a_1.\cos(\omega.t + \phi/2)$ et à $a_1.\cos(\omega.t - \phi/2)$ à l'instant t considéré, après normalisation des amplitudes de S et S'.

L'angle tournant ω.t peut ainsi être évalué par la relation :

$$\omega.t = \text{Arctg} \quad [\{a_1.\sin(\omega.t + \phi/2) + a_1.\sin(\omega.t - \phi/2)\} /$$

$$\{a_1.\cos(\omega.t + \phi/2) + a_1.\cos(\omega.t - \phi/2)\}],$$

la différence de phase $\phi$ pouvant ensuite être évaluée par la relation :

$$\phi = 2.[\text{Arcsin}\{\sin(\omega.t + \phi/2)\} - \omega.t]$$

**Revendications**

1. Procédé de surveillance de la rotation d'un corps (1) tournant autour d'un axe de rotation (H) et portant, sur sa périphérie, au moins une première piste circulaire (P) centrée sur l'axe de rotation et constituée de marques (2) régulièrement espacées les unes des autres; dans lequel chaque piste (P) de marques (2) est associée à un capteur (3) stationnaire par rapport au corps tournant (1), disposé en regard de cette piste, influencé par les marques (2) de cette piste qui défilent devant lui et produisant, en tant que signal de sortie, un signal périodique (S) correspondant, dans lequel on procède à l'extraction d'au moins une grandeur, telle qu'une amplitude entre extremums $(2 \times \sqrt{\hat{x}_p^2 + \hat{x}_q^2})$, une fréquence fondamentale ($\omega/2\pi$), une phase ($\phi$), ou une amplitude constante ($\hat{x}_c$) de fond continu, associée à un signal périodique (S) présentant une fréquence au plus égale à une fréquence maximale prédéterminée ($f_{max}$) et incluant une éventuelle composante continue (So), une composante fondamentale sinusoïdale (S1) et d'éventuelles harmoniques (Sn), **caractérisé en ce qu'**il comprend :

   - une opération préliminaire (MODEL) consistant à établir un modèle de système dynamique défini par un vecteur d'état instantané ($\hat{x}$) à plusieurs composantes $\hat{x}_p$, $\hat{x}_q$, $\hat{x}_c$, $\hat{\omega}$ et par une matrice (A) de transition d'état, la composante $\hat{x}_p$ étant représentative de l'amplitude instantanée de la composante fondamentale (S1) du signal périodique (S), la composante $\hat{x}_q$ étant représentative de l'amplitude instantanée de la composante fondamentale (S1) du signal périodique déphasée de 90 degrés, la composante $\hat{x}_c$ étant représentative de l'amplitude de la composante continue (So), et la composante $\hat{\omega}$ étant représentative de la pulsation ou de la fréquence de la composante fondamentale (S1);

   - une opération itérative de mesure (MES) consistant à produire, à une fréquence ($f_e$) au moins égale au double de la fréquence maximale prédéterminée ($f_{max}$), des échantillons numériques ($y_k$) dont chacun est représentatif de l'amplitude instantanée mesurée du signal périodique;

   - une opération itérative de prédiction (PRED), consistant à calculer une amplitude instantanée prédite ($\hat{y}_{k/k-1}$) du signal périodique (S) à chaque instant (k) en cours par application (PRED1) de la matrice (A) de transition au vecteur d'état ($\hat{x}_{k-1/k-1}$) associé à un instant (k-1) précédant l'instant en cours (k), conduisant à un vecteur d'état prédit ($\hat{x}_{k/k-1}$) pour l'instant en cours (k), puis par application (PRED2) au vecteur d'état prédit ($\hat{x}_{k/k-1}$) d'une matrice d'observation (C) assimilant l'amplitude instantanée mesurée du signal périodique (S) à une manifestation au moins partielle du vecteur d'état instantané du système dynamique;

   - une opération itérative de correction (CORR), consistant à quantifier un écart ($v_k$) entre l'amplitude mesurée ($y_k$) et l'amplitude prédite ($\hat{y}_{k/k-1}$) du signal périodique à l'instant en cours (k);

   - une opération itérative de mise à jour (MAJ), consistant à mettre à jour le vecteur d'état instantané ($\hat{x}_{k/k}$) du système, associé à l'instant en cours (k), en fonction de l'écart quantifié ($v_k$) et du vecteur d'état ($\hat{x}_{k/k-1}$) du système qui est associé à l'instant (k-1) précédant l'instant en cours (k); et

   - une opération itérative de présentation de résultat (RESULT), consistant à déduire à chaque instant (k) ladite grandeur de l'une au moins des composantes $\hat{x}_p$, $\hat{x}_q$, $\hat{x}_c$, $\hat{\omega}$ du vecteur d'état instantané ($\hat{x}_{k/k}$) associé à cet instant (k).

2. Procédé selon la revendication précédente, **caractérisé en ce que** le signal périodique (S) comprend, parmi plusieurs harmoniques (Sn) éventuelles, une harmonique (Sninf) d'ordre minimal, et **en ce que** l'amplitude entre extremums de l'harmonique d'ordre minimal est au moins égale au dixième de l'amplitude entre extremums de la composante fondamentale (S1).

3. Procédé suivant la revendication 1 ou 2, **caractérisée en ce que** le corps tournant (1) est un pneumatique monté sur une jante (4) de roue d'un véhicule, **en ce qu'**un flanc (11) de ce pneumatique porte au moins deux pistes (P, P') de marques (2, 2') dont la première (P) est relativement proche de la jante (4) et dont la seconde (P') est relativement proche d'une bande de roulement (12) du pneumatique, et **en ce que** les première et seconde pistes (P, P') portent le même nombre de marques (2, 2') et sont associées à des premier et second capteurs respectifs (3, 3') délivrant des premier et second signaux périodiques respectifs (S, S'), la surveillance de la rotation du pneumatique incluant au moins la détermination d'une différence de phase (φ) entre les premier et second signaux périodiques (S, S').

4. Procédé suivant la revendication 3, **caractérisée en ce que** chaque marque (2, 2') est constituée par une aimantation locale du flanc (11) du pneumatique (1).

5. Procédé suivant la revendication 3 ou 4, **caractérisée en ce que** la surveillance ou l'analyse de la rotation du pneumatique (1) inclut une évaluation d'une déformation du flanc (11) du pneumatique (1), résultant de l'application d'un couple entre la jante (4) et la bande de roulement (12), et se traduisant par une variation de la différence de phase (φ) entre les premier et second signaux périodiques (S, S').


**Claims**

1. A process for monitoring the rotation of a body (1) revolving around an axis of rotation (H) and having, over its periphery, at least a first circular track (P) centred on the axis of rotation and consisting of marks (2) spaced regularly from one another, in which each track (P) of marks (2) is associated with a sensor (3) which is stationary relative to the revolving body (1), disposed facing said track and influenced by the marks (2) of said track which travel past it and producing, as an output signal, a corresponding periodic signal (S), in which extraction is performed of at least one variable, such as an amplitude between extrema $\left( 2 \times \sqrt{\hat{x}_p^2 + \hat{x}_q^2} \right)$, a fundamental frequency ($\hat{\omega}/2\pi$), a phase (φ), or a continuous background constant amplitude ($\hat{x}_c$), associated with a periodic signal (S) having a frequency at most equal to a predetermined maximum frequency ($f_{max}$) and including a possible continuous component (So), a sinusoidal fundamental component (S1) and possible harmonics (Sn), **characterised in that** it comprises:

- a preliminary operation (MODEL) consisting in establishing a dynamic system model defined by an instantaneous state vector ($\hat{x}$) with a plurality of components ($\hat{x}_p$, $\hat{x}_q$, $\hat{x}_c$, $\hat{\omega}$) and by a state transition matrix ($A$), the component ($\hat{x}_p$) being representative of the instantaneous amplitude of the fundamental component (S1) of the periodic signal (S), the component ($\hat{x}_q$) being representative of the instantaneous amplitude of the fundamental component (S1) of the periodic signal out of phase by 90 degrees, the component ($\hat{x}_c$) being representative of the amplitude of the continuous component (So), and the component ($\hat{\omega}$) being representative of the pulsation or of the frequency of the fundamental component (S1);
- an iterative measuring operation (MEAS) consisting in producing, at a frequency ($f_e$) at least equal to twice the predetermined maximum frequency ($f_{max}$), numerical samples ($y_k$) each of which is representative of the measured instantaneous amplitude of the periodic signal;
- an iterative predicting operation (PRED), consisting in calculating a predicted instantaneous amplitude ($\hat{y}_{k/k-1}$) of the periodic signal (S) at each current instant (k) by applying (PRED1) the transition matrix ($A$) to the state vector ($\hat{x}_{k-1/k-1}$) associated with an instant (k-1) preceding the current instant (k), resulting in a predicted state vector ($\hat{x}_{k/k-1}$) for the current instant (k), then by applying (PRED2) to the predicted state vector ($\hat{x}_{k/k-1}$) an observation matrix ($C$) interpreting the measured instantaneous amplitude of the periodic signal (S) as an at least partial manifestation of the instantaneous state vector of the dynamic system;
- an iterative correcting operation (CORR), consisting in quantifying a difference ($v_k$) between the measured amplitude ($y_k$) and the predicted amplitude ($\hat{y}_{k/k-1}$) of the periodic signal at the current instant (k);
- an iterative updating operation (UPD), consisting in updating the instantaneous state vector ($\hat{x}_{k/k}$) of the system, associated with the current instant (k), as a function of the quantified difference ($v_k$) and of the state vector ($\hat{x}_{k/k-1}$) of the system which is associated with the instant (k-1) preceding the current instant (k); and

- an iterative result-presenting operation (RESULT), consisting in deducing at each instant (k) said variable of one at least of the components $(\hat{x}_p, \hat{x}_q, \hat{x}_c, \hat{\omega})$ of the instantaneous state vector $(\hat{x}_{k/k})$ associated with said instant (k).

2. A process according to the preceding claim, **characterised in that** the periodic signal (S) comprises, among several possible harmonics (Sn), a minimum-order harmonic (Sninf), and **in that** the amplitude between extrema of the minimum-order harmonic is at least equal to a tenth of the amplitude between extrema of the fundamental component (S1).

3. A process according to claim 1 or 2, **characterised in that** the revolving body (1) is a tyre mounted on a wheel rim (4) of a vehicle, **in that** a sidewall (11) of said tyre bears at least two tracks (P, P') of marks (2, 2'), the first (P) of which is relatively close to the rim (4) and the second (P') of which is relatively close to a tread (12) of the tyre, and **in that** the first and second tracks (P, P') have the same number of marks (2, 2') and are associated with respective first and second sensors (3, 3') supplying respective first and second periodic signals (S, S'), monitoring of rotation of the tyre including at least determination of a phase difference (φ) between the first and second periodic signals (S, S').

4. A process according to claim 3, **characterised in that** each mark (2, 2') consists of local magnetisation of the sidewall (11) of the tyre (1).

5. A process according to claim 3 or 4, **characterised in that** monitoring or analysis of the rotation of the tyre (1) includes evaluation of a deformation of the sidewall (11) of the tyre (1), resulting from the application of a torque between the rim (4) and the tread (12) and expressed as a variation in the phase difference (φ) between the first and second periodic signals (S, S').

**Patentansprüche**

1. Verfahren zur Überwachung der Drehung eines um eine Drehachse (H) drehenden Körpers (1), der auf seinem Umfang mindestens eine erste kreisförmige Bahn (P) trägt, die auf die Drehachse zentriert ist und aus Markierungen (2) besteht, die in Abstand zueinander angeordnet sind, wobei jede Bahn (P) von Markierungen (2) einem bezüglich des drehenden Körpers (1) ortsfesten Sensor (3) zugeordnet ist, der gegenüber dieser Bahn angeordnet ist, durch die Markierungen (2) dieser Bahn, die vor ihm vorbeilaufen, beeinflusst wird, und als Ausgangssignal ein entsprechendes periodisches Signal (S) erzeugt, wobei die Entnahme mindestens einer Größe durchgeführt wird, wie eine Amplitude zwischen Extremwerten $\left(2x\sqrt{\hat{x}_p^2 + \hat{x}_q^2}\right)$, eine Grundfrequenz (ω/2π), eine Phase (φ), oder eine konstante Amplitude $(\hat{x}_c)$ eines kontinuierlichen Grunds, die einem periodischen Signal (S) zugeordnet ist, das eine Frequenz höchstens gleich einer maximalen vorbestimmten Frequenz $(f_{max})$ hat und eine mögliche kontinuierliche Komponente (So), eine sinusförmige Grundkomponente (S1) und mögliche Harmonische (Sn) umfasst, **dadurch gekennzeichnet, dass** es aufweist:

- einen einleitenden Vorgang (MODEL), der darin besteht, ein Modell eines dynamischen Systems zu erstellen, das von einem Momentanzustandsvektor $(\hat{x})$ mit mehreren Komponenten $\hat{x}_p, \hat{x}_q, \hat{x}_c, \hat{\omega}$ und von einer Zustandsübergangsmatrix (A) definiert wird, wobei die Komponente $\hat{x}_p$ für die Momentanamplitude der Grundkomponente (S1) des periodischen Signals (S) repräsentativ ist, die Komponente $\hat{x}_q$ für die Momentanamplitude der Grundkomponente (S1) des um 90 Grad phasenverschobenen periodischen Signals repräsentativ ist, die Komponente $\hat{x}_c$ für die Amplitude der kontinuierlichen Komponente (So) repräsentativ ist, und die Komponente $\hat{\omega}$ für die Kreisfrequenz oder die Frequenz der Grundkomponente (S1) repräsentativ ist;
- einen iterativen Messvorgang (MES), der darin besteht, mit einer Frequenz $(f_e)$ mindestens gleich dem Doppelten der maximalen vorbestimmten Frequenz $(f_{max})$ digitale Tastproben $(y_k)$ zu erzeugen, von denen jede für die gemessene Momentanamplitude des periodischen Signals repräsentativ ist;
- einen iterativen Vorhersagevorgang (PRED), der darin besteht, eine vorhergesagte Momentanamplitude $(\hat{y}_{k/k-1})$ des periodischen Signals (S) in jedem laufenden Moment (k) durch Anwendung (PRED1) der Übergangsmatrix (A) an den Zustandsvektor $(\hat{x}_{k-1/k-1})$, der einem Moment (k-1) zugeordnet ist, der vor dem laufenden Moment (k) liegt, was zu einem vorhergesagten Zustandsvektor $(\hat{x}_{k/k-1})$ für den laufenden Moment (k) führt, dann durch Anwendung (PRED2) an den vorhergesagten Zustandsvektor $(\hat{x}_{k/k-1})$ einer Beobachtungsmatrix (C), die die gemessene Momentanamplitude des periodischen Signals (S) einem zumindest teilweisen Auftreten des Momentanzustandsvektors des dynamischen Systems zuordnet, zu berechnen;

- einen iterativen Korrekturvorgang (CORR), der darin besteht, eine Abweichung ($v_k$) zwischen der gemessenen Amplitude ($y_k$) und der vorhergesagten Amplitude ($\hat{y}_{k/k-1}$) des periodischen Signals im laufenden Moment (k) zu quantifizieren;

- einen iterativen Vorgang der Aktualisierung (MAJ), der darin besteht, den Momentanzustandsvektor ($\hat{x}_{k/k}$) des Systems, der dem laufenden Moment (k) zugeordnet ist, in Abhängigkeit von der quantifizierten Abweichung ($v_k$) und vom Zustandsvektor ($\hat{x}_{k/k-1}$) des Systems, der dem Moment (k-1) vor dem laufenden Moment (k) zugeordnet ist, zu aktualisieren; und

- einen iterativen Vorgang der Ergebnispräsentation (RESULT), der darin besteht, in jedem Moment (k) die Größe von mindestens einer der Komponenten $\hat{x}_p$, $\hat{x}_q$, $\hat{x}_c$, $\hat{\omega}$ des diesem Moment (k) zugeordneten Momentanzustandsvektors ($\hat{x}_{k/k}$) abzuleiten.

2. Verfahren nach dem vorhergehenden Anspruch, **dadurch gekennzeichnet, dass** das periodische Signal (S) unter mehreren möglichen Harmonischen (Sn) eine Harmonische (Sninf) minimaler Ordnung aufweist, und dass die Amplitude zwischen Extremwerten der Harmonischen minimaler Ordnung mindestens gleich dem Zehntel der Amplitude zwischen Extremwerten der Grundkomponente (S1) ist.

3. Verfahren nach Anspruch 1 oder 2, **dadurch gekennzeichnet, dass** der drehende Körper (1) ein Luftreifen (1) ist, der auf eine Radfelge (4) eines Fahrzeugs montiert ist, dass eine Flanke (11) dieses Luftreifens mindestens zwei Bahnen (P, P') von Markierungen (2, 2') trägt, von denen die erste (P) relativ nahe der Felge (4) ist, und von denen die zweite (P') relativ nahe einer Lauffläche (12) des Luftreifens ist, und dass die erste und die zweite Bahn (P, P') die gleiche Anzahl von Markierungen (2, 2') tragen und ersten bzw. zweiten Sensoren (3, 3') zugeordnet sind, die erste bzw. zweite periodische Signale (S, S') liefern, wobei die Überwachung der Drehung des Luftreifens mindestens die Bestimmung einer Phasendifferenz ($\phi$) zwischen dem ersten und dem zweiten periodischen Signal (S, S') umfasst.

4. Verfahren nach Anspruch 3, **dadurch gekennzeichnet, dass** jede Markierung (2, 2') aus einer lokalen Magnetisierung der Flanke (11) des Luftreifens (1) besteht.

5. Verfahren nach Anspruch 3 oder 4, **dadurch gekennzeichnet, dass** die Überwachung oder die Analyse der Drehung des Luftreifens (1) eine Bewertung einer Verformung der Flanke (11) des Luftreifens (1) enthält, die aus der Anwendung eines Drehmoments zwischen der Felge (4) und der Lauffläche (12) resultiert und sich durch eine Veränderung der Phasendifferenz (P) zwischen dem ersten und dem zweiten periodischen Signal (S, S') äußert.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4754871 A

- US 5913240 A